# EUROPÄISCHE PATENTANMELDUNG

(11) **EP 3 783 769 A1**
(43) Veröffentlichungstag der Anmeldung: **24.02.2021**
(21) Anmeldenummer: 20192095.6
(22) Anmeldetag: 21.08.2020
(51) Int. Cl.: H02J 7/00

(54) **LADEGERÄT FÜR EIN FLURFÖRDERZEUG**

(30) Priorität: 22.08.2019 DE 102019122658
(71) Anmelder: Jungheinrich Aktiengesellschaft, 22047 Hamburg (DE)
(72) Erfinder: Petersen, Marinus, 24536 Neumünster (DE); Wetegrove, Ralf, 22850 Norderstedt (DE)
(74) Vertreter: Hauck Patentanwaltspartnerschaft mbB

(57) **Zusammenfassung**

Ladegerät mit mindestens einem GaN-Transistor, insbesondere ein On-Board Ladegerät für ein Flurförderzeug, dessen Leistungselektronik eine Gleichrichterschaltung mit einer Leistungsfaktorkorrektur und einen über einen Gleichspannungszwischenkreis angeschlossenen Gleichspannungswandler aufweist, wobei ein Hauptladebereich mit mindestens einem Spannungsintervall für den Gleichspannungswandler und mindestens ein Hilfsladebereich mit außerhalb des Hauptladebereichs vorgesehen sind, wobei ein Hilfsladestrom in dem Hilfsladebereich kleiner als ein Ladestrom im Hauptladebereich ist.

## Beschreibung

Die vorliegende Erfindung betrifft ein Ladegerät für ein Flurförderzeug, insbesondere betrifft die Erfindung ein Einbauladegerät für ein Flurförderzeug. Einbau- oder auch On-Board Ladegeräte, sind Ladegeräte, die in das Flurförderzeug eingebaut sind und für den Ladevorgang mit einer externen Wechselspannungsquelle verbunden werden, um eine an Bord befindliche Batterie zu laden.

Einbauladegeräte unterliegen ebenso wie externe Ladegeräte der allgemeinen Anforderung nach einem möglichst guten Wirkungsgrad. Zudem unterliegen sie aber als Einbauladegeräte auch der Randbedingung, möglichst klein zu bauen und eine ausgeglichene Wärmeabgabe zu besitzen.

Aus EP 2 781 012 B1 ist eine Gleichrichterschaltung bekannt geworden, die Elemente einer Stromverdoppler-Schaltung einsetzt, unter anderem für ein induktives Ladesystem.

CN 201122859Y betrifft ein 24-Volt Ladegerät, das für eine stabile Gleichstromausgangsspannung mit einer Kompensation für die Restwelligkeit (ripple compensation) ausgestattet ist.

Der Erfindung liegt die Aufgabe zu Grunde ein Ladegerät für ein Flurförderzeug bereitzustellen, das bei begrenztem Bauraum und kritischer Wärmeabfuhr eine hohe Leistungsdichte und einen guten Wirkungsgrad zur Verfügung stellt.

Erfindungsgemäß wird die Aufgabe durch ein Ladegerät mit den Merkmalen aus Anspruch 1 gelöst. Vorteilhafte Ausgestaltungen bilden die Gegenstände der Unteransprüche.

Das erfindungsgemäße Ladegerät ist insbesondere als ein Einbauladegerät für ein Flurförderzeug ausgebildet. Die Leistungselektronik des Ladegeräts besitzt eine Gleichrichterschalter mit einer Leistungsfaktorkorrektur und einem über einen Gleichspannungszwischenkreis angeschlossenen Gleichspannungswandler. Erfindungsgemäß ist mindestens ein Hauptladebereich mit einem Spannungsintervall für den Gleichspannungswandler vorgesehen und außerhalb des Hauptladebereichs mindestens ein Hilfsladebereich definiert. Der Ladestrom des Hilfsladebereichs ist kleiner als ein Ladestrom im Hauptladebereich. Der erfindungsgemäß vorgesehene Unterschied zwischen einem Hauptladebereich und einem Hilfsladebereich erlaubt, mit einem hohen Wirkungsgrad den Ladevorgang durchzuführen.

In einer bevorzugten Weiterbildung wird in dem Hauptladebereich über den Gleichspannungswandler und in dem Hilfsladebereich über eine Hilfsschaltung geladen. Hierbei ist bevorzugt der Gleichspannungswandler als ein Resonanzwandler mit mindestens einem GaN-Transistor ausgebildet. Die Verwendung von einem GaN-Transistor stellt bei dem Resonanzwandler eine hohe Leistungsdichte und einen guten Wirkungsgrad sicher. Der Resonanzwandler ist hierbei ein galvanisch getrennter Gleichspannungswandler dessen Auslegung nur einen begrenzten Ausgangsspannungsbereich, beispielsweise von ± 10% der Nennspannung zulässt.

Bevorzugt ist eine Steuerung vorgesehen, die abhängig von der Batteriespannung zwischen Hauptladebereich und dem mindestens einen Hilfsladebereich umschaltet. Insbesondere schaltet die Steuerung zwischen dem Resonanzwandler und der Hilfsschaltung abhängig von der Batteriespannung um.

In einer bevorzugten Ausgestaltung ist ein erster Hilfsladebereich für tiefentladene Batterien vorgesehen, in dem der Ladevorgang mit einem ersten Hilfsladestrom erfolgt. Bevorzugt liegt der erste Hilfsladebereich für Batteriespannungen vor, die kleiner als die Batteriespannungen für den Hauptladebereich sind.

In einer weiter bevorzugten Ausgestaltung ist ein zweiter Hilfsladebereich vorgesehen, in dem bevorzugt ein Balancing und / oder eine Erhaltungsladung der Batterie erfolgt. In dem zweiten Hilfsladebereich erfolgt der Ladevorgang mit einem zweiten Hilfsladestrom. Erster und zweiter Hilfsladestrom sind bevorzugt kleiner als der Ladestrom im Hauptladebereich. Bevorzugt sind erster und zweiter Hilfsladestrom gleich groß.

In einer bevorzugten Ausgestaltung ist als Hilfsladeschaltung eine Schaltung mit einem Sperrwandler und mit einem Abwärtswandler vorgesehen. Diese Schaltung kann so ausgelegt sein, dass sie direkt im Anschluss an Werte der Batteriespannung des Hauptladebereichs den Hilfsladestrom zur Ladung der Batterie zur Verfügung stellt.

In einer bevorzugten Ausbildung ist die Gleichrichterschaltung dazu ausgebildet, über einen elektrischen Steckverbinder eine Wechselspannungsquelle, insbesondere an eine Wechselspannungssteckdose angeschlossen zu werden. Als Wechselspannungssteckdose wird hierbei die in dem jeweiligen Land übliche Haushaltssteckdose bezeichnet, die beispielsweise für 230 V Wechselspannung und eine Leistung von bis zu 3,8 kW ausgelegt ist.

In einer bevorzugten Weiterbildung ist zudem vorgesehen, dass bei einer Verwendung für Bleibatterien der Gleichspannungswandler und / oder die Hilfsschaltung mit weniger als 0,4 C, bevorzugt mit 0,1 bis 0,3 C betrieben wird. Die Größe bezeichnet hier den sogenannten C-Faktor, mit dem Batterien und ihr maximal zulässiger Ladestrom gekennzeichnet wird. Besitzt eine Batterie eine Kapazität Cₙ, so gibt das Produkt aus C-Faktor und Cₙ den maximalen Ladestrom an.

In einer weiter bevorzugten Ausgestaltung ist eine Ladekurve für eine Bleibatterie in der Steuerung vorgesehen, wobei die Ladekurve bei einer fehlenden Rückmeldung von der Batterie über ihren Batterietypus verwendet wird. Die Ansteuerung nach der Ladekurve erfolgt abhängig von der Batteriespannung, wobei der Gleichspannungswandler oder die mindestens eine Hilfsschaltung entsprechend der Batteriespannung angesteuert wird. Über die Steuerung wird die Batterie spannungsabhängig aufgeladen.

In einer weiteren bevorzugten Ausgestaltung ist vorgesehen, eine Zwischenkreisspannung abhängig von der Batteriespannung einzustellen. Insbesondere für den mindestens einen Hilfsladebereich kann die Spannung im Zwischenkreis auf einen minimalen oder einen maximalen Wert eingestellt werden. Insbesondere bei Batteriespannungswerten kleiner als die Werte im Hauptladebereich kann die Zwischenkreisspannung auf einen minimalen Wert eingestellt werden. Dagegen kann im Bereich von Spannungswerten, die größer als die Werte im Hauptladebereich sind, die Zwischenkreisspannung auf einen möglichst großen Wert gestellt werden.

Eine bevorzugte Ausgestaltung des erfindungsgemäßen Ladegeräts wird nachfolgend anhand des Ausführungsbeispiels verdeutlicht.

Es zeigen:
- Fig. 1: ein Blockschaltbild für das erfindungsgemäße Ladegerät mit einer Gleichrichterschaltung und einem Gleichspannungswandler,
- Fig. 2a, b: beispielhaft den Aufbau für eine Gleichrichterschaltung und für einen Gleichspannungswandler und
- Fig. 3: die Abhängigkeit der Ladeströme von der Batteriespannung.

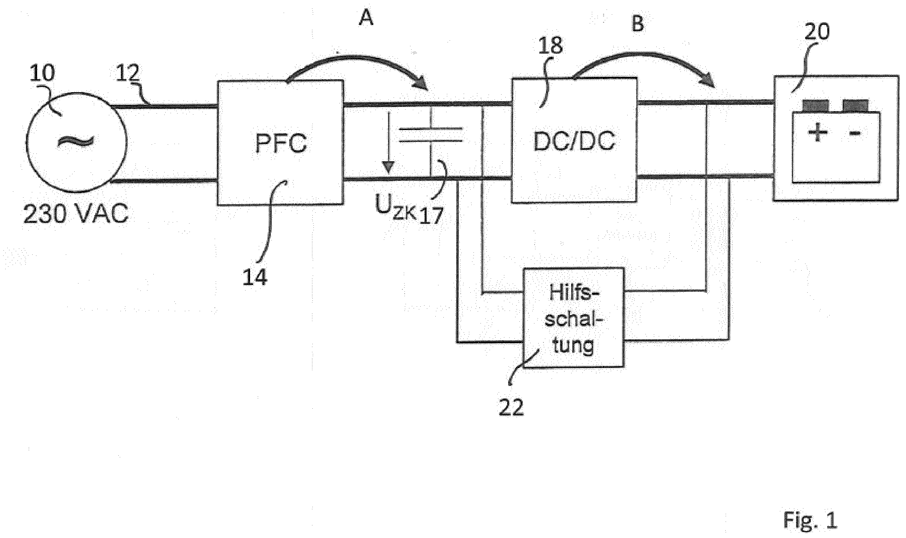

Fig. 1 zeigt in einem Blockschaltbild ein Einbauladegerät für ein Flurförderzeug. Die Spannungsquelle ist eine externe Wechselspannungsquelle mit 230 Volt. Hierbei kann es sich um eine übliche Schuko-Steckdose handeln. Diese ist über ein Kabel 12 mit einer Gleichrichterschaltung 14 verbunden. Die Gleichrichterschaltung 14 besitzt ebenfalls einen Leistungsfaktorkorrekturfilter, Power Factor Correction PFC, wobei durch diesen der Leistungsfaktor erhöht wird, um eine Rückwirkung des Gleichrichters auf das öffentliche Stromnetz zu vermeiden. An die Gleichrichterschaltung 14 schließt sich ein Gleichspannungszwischenkreis 16 an, dessen Spannungswerte durch einen Zwischenkreiskondensator 18 geglättet werden. An den Gleichspannungszwischenkreis 17 angeschlossen ist ein Gleichspannungswandler 18 DC/DC, mit dem eine an Bord befindliche Batterie des Flurförderzeugs geladen wird. Parallel zu dem Gleichspannungswandler 18 ist eine Hilfsschaltung 22 geschaltet, mit der die Spannung aus dem Gleichspannungszwischenkreis 16 entsprechend modifiziert an die an Bord befindliche Batterie 20 zum Laden angelegt werden kann.

Für den Einsatz als Einbauladegerät bei einem Flurförderzeug sind verschiedene Randbedingungen zu betrachten. Zunächst ist es bei der Verwendung von Flurförderzeugen mit Lithium-Ionen-Batterien im Mehrschichtbetrieb erforderlich, dass eine Schnell- bzw. Zwischenlademöglichkeit mit einem C-Faktor von ungefähr 1 besteht. Auf diese Weise müssen die Fahrzeuge oder Batterien bei einem Mehrschichtbetrieb nicht gewechselt werden. Ein Nachladen der Batterien mit ausreichend hohem C-Faktor in Arbeitspausen ist in der Regel ausreichend. Weiterhin, werden im Bereich der Intralogistik auch noch Bleibatterien - sofern sie vorhanden sind - eingesetzt. Bleibatterien erlauben in der Regel für ihren Ladevorgang einen C-Faktor von 0,2. Ein Laden mit einem größeren C-Faktor ist für ältere Batterien, wie beispielsweise Bleibatterien, nicht möglich. Weitere wichtige Randbedingung für das Einbauladegerät ist die Möglichkeit das Flurförderzeug an einer Schuko-Steckdose zu laden, so dass die Leistungselektronik sich also an Bord des Fahrzeugs befindet. Dies bildet besondere Anforderungen für den begrenzten Bauraum in Fahrzeugen sowie für die Wärmeabfuhr. Es ist eine hohe Leistungsdichte bei einem hohen Wirkungsgrad für die Leistungselektronik erforderlich.

Auch die Verwendung des Einbauladegeräts für Flurförderzeuge bedingt einige Besonderheiten: Einerseits liegt eine Besonderheit darin, dass bei vielen Flurförderzeugflotten noch vorhandene Bleibatterien abwechselnd und / oder in Kombination mit Lithium-Ionen-Batterien Verwendung finden. Dies macht eine besondere Flexibilität der Einbauladegeräte erforderlich. Ferner arbeiten Flurförderzeuge bei Betriebsspannungen von 24, 40 oder 80 Volt, während andere elektrische Fahrzeuge im Gegensatz dazu bei deutlich höheren Spannungswerten arbeiten. Hierdurch müssen Ladegeräte bei Flurförderzeugen deutlich höhere Stromwerte zur Ladung der Batterie bereitstellen, was ebenfalls eine besondere Anforderung an die Wärmeabfuhr des Ladegeräts stellt. Darüber hinaus sind Flurförderzeuge starken Erschütterungen im Betrieb ausgesetzt, für die ebenfalls das an Bord befindliche Ladegerät ausgelegt sein muss.

Bei dem erfindungsgemäßen Ladegerät werden für die Leistungshalbleiter GaN-Transistoren eingesetzt, um so den Anforderungen an Leistungsdichte und Wirkungsgrad genügen zu können. Die gemeinsame Verwendung von Bleibatterien und Lithium-Ionen-Batterien, also die Anforderung Ladevorgänge mit deutlich unterschiedlichen C-Faktoren auszuführen zu können, wird durch die Verwendung einer parallel angeordneten Hilfsschaltung 22 sichergestellt. Eine Steuerung, die zwischen dem Gleichspannungswandler 18 und der Hilfsschaltung 22 umschaltet ist in Fig. 1 nicht dargestellt.

Der in Fig. 1 angezeigte Aufbau entspricht einem zweistufigen Konzept, bei dem in einer ersten Stufe a über die Gleichrichterschaltung 14 die Zwischenkreisspannung U_{zk} geregelt wird. In einer zweiten Stufe b wird mit Hilfe eines galvanisch getrennten Gleichspannungswandlers DC/DC 18 der Ladestrom geregelt. Der DC/DC-Wandler ist in dem dargestellten Ausführungsbeispiel als Resonanzwandler ausgeführt, um einen möglichst hohen Wirkungsgrad zu erzielen. Üblich ist hier beispielsweise die Verwendung einer LLC-Schaltung in Kombination mit einer Gleichrichterschaltung auf der Sekundärseite. Die optimale Auslegung des Gleichspannungswandlers als Resonanzwandler ist für eine Nennspannung Uₙₒₘ in einem Bereich von ungefähr ± 10% effektiv möglich. Da die Ausgangsspannung des Gleichspannungswandlers mittels der Frequenz im Resonanzkreis geregelt wird, verschlechtern sich die Schaltbedingungen für die Leistungshalbleiter bei zunehmender Abweichung der Spannung bzw. Frequenz vom Nennbetriebspunkt. Hierdurch steigen die Schaltverluste an, was zu einer übermäßigen Erwärmung der Leistungselektronik führt.

Die Steuerung des Einbauladegeräts ist ausgelegt, um Bleibatterien mit vorbestimmten Batterieladekurven zu laden. Wird eine Bleibatterie in dem Flurförderzeug eingesetzt, so greift die Steuerung des Ladegeräts auf die hinterlegte Batterieladekurve zurück. Es wird dann spannungsabhängig der Gleichspannungswandler 18 oder die Hilfsschaltung 22 angesteuert, um die Bleibatterie entsprechend ihrer Batterieladekurve zu laden. Wird eine Li-Ionen-Batterie in dem Fahrzeug eingesetzt, erfolgt herkömmlicherweise eine Kommunikation über einen CAN-Bus, über den sich die Lithium-Ionen-Batterie mit ihrem Batteriemanagementsystem zu Beginn des Ladevorgangs anmeldet und beispielsweise für den Ladevorgang charakteristische Werte sendet. Das Einbauladegerät wird typischerweise bei der Auslieferung auf den im Flurförderzeug eingebauten Batterietyp (Blei- oder Li-Ionen-Batterie) parametriert.

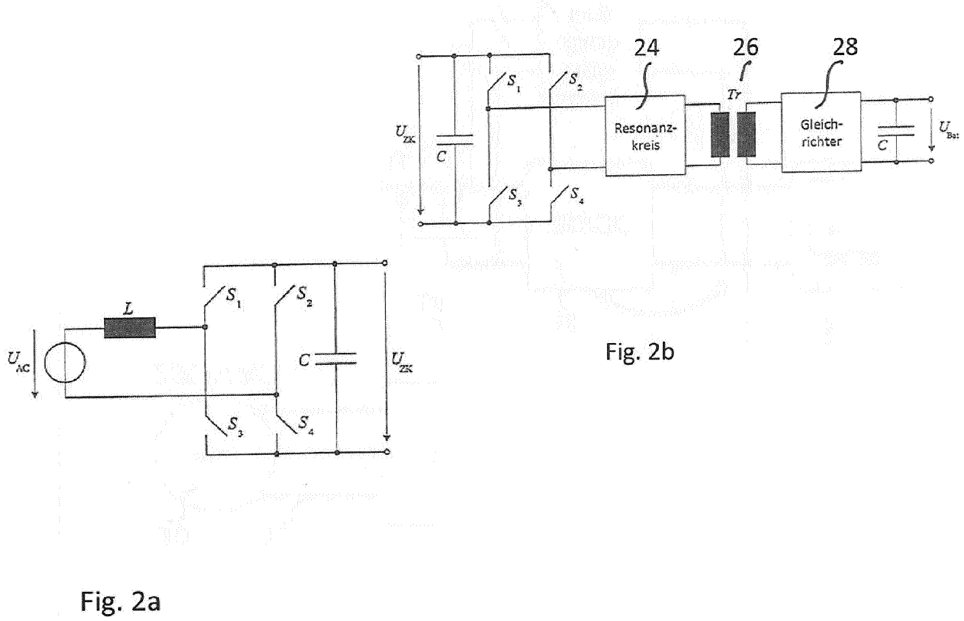

Fig. 2 zeigt beispielhaft den Aufbau der Gleichrichterschaltung 14 mit einer PFC-Schaltung (power factor control). Hierbei sind die Eingangsschalter S₁ und S₃ als GaN-Transistoren ausgebildet. Der Fachmann erkennt die in Fig. 2a dargestellte Schaltung als eine Totem-Pole-Schaltung.

Fig. 2b zeigt ein Beispiel für einen galvanisch getrennten Gleichspannungswandler, der mit GaN-Transistoren für seine Schalter S₁, S₂, S₃ und S₄ ausgebildet ist. Die Schaltung besitzt einen Resonanzkreis 24, einen Transformator 26 und einen sekundärseitig von diesem vorgesehenen Gleichrichter (28). Fachsprachlich wird dieser Gleichspannungswandler auch als Resonanzwandler bezeichnet.

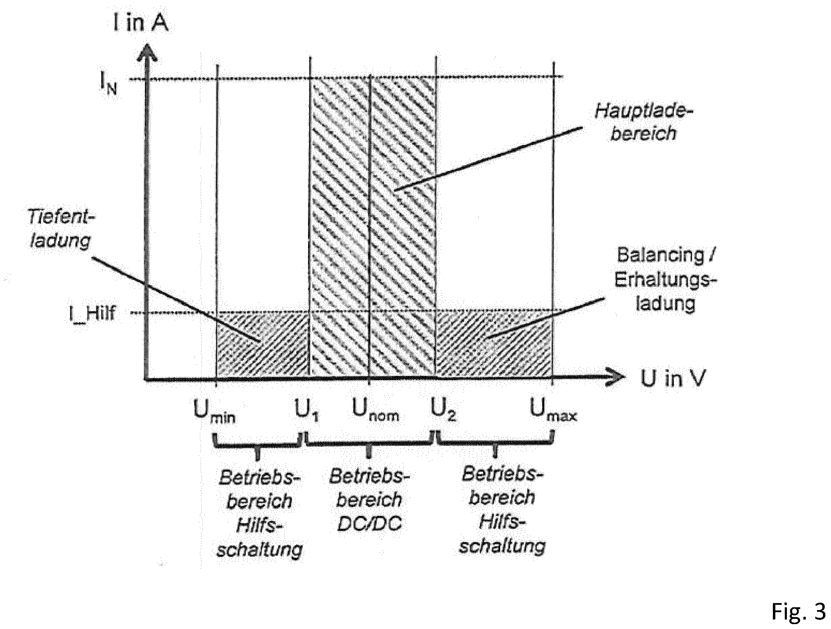

Fig. 3 zeigt die Regelung des Ladegeräts abhängig von der Batteriespannung. In einem Hauptladebereich mit Batteriespannungen U, für die U₁ ≤ U ≤ U₂ ist, erfolgt ein Ladestrom I_{N} zum Aufladen der Batterie. Für Spannungen aus dem Intervall [Umin, U₁ und] U₂, Uₘₐₓ] liegt ein Hilfsladestrom I_{Hilf} vor, wobei der Wert des Hilfsladestroms deutlich kleiner als der Wert des Nennladestroms ist. Der Betrieb für Spannungen kleiner als U₁ ist der Betrieb, mit dem eine tiefentladene Batterie mit einem kleinen Ladestrom wieder geladen wird. Der Ladebetrieb für Batteriespannungen größer U₂ ist ein Betriebsbereich, in dem ein Balancing der Lithium-Ionen-Batterie oder eine Erhaltungsladung einer Bleibatterie durchgeführt werden kann. Da die Spannungen gerade bei Bleibatterien erheblich variieren können beispielsweise ± 50% der Nennspannung ist ein herkömmliches zweistufiges Ladegerät nicht ausreichend. Für die Verwendung auch bei Bleibatterien ist eine Hilfsschaltung erforderlich, die bevorzugt mit einem Sperrwandler und einem Abwärtswandler, fachsprachlich Flyback- und Buck-Converter. Die Hilfsschaltung übernimmt in den Randbereichen in der Batteriespannung, in dem Tiefentladung oder Balancing bei Lithium-Ionen-Batterien liegt, bzw. eine Erhaltungsladung bei Bleibatterien erforderlich ist. Die Hilfsschaltung kann auf eine sehr kleine Leistung, beispielsweise weniger als 3% der Nennleistung des Einbauladegeräts ausgelegt sein, da nur sehr geringe Hilfsladeströme erforderlich sind. Hierdurch halten sich auch die Kosten für die Hilfsschaltung in Grenzen. Im Falle der Tiefentladung ist auch bei Lithium-Ionen-Batterien nur ein geringer Strom notwendig, da die Spannung der tiefentladenen Batterie technologiebedingt auch bei sehr kleinen Ladeströmen vergleichsweise schnell wieder ansteigt. Sobald die Batteriespannung die Spannung U₁ erreicht hat, erfolgt ein Umschalten auf die DC/DC-Schaltung und die volle Ladeleistung bzw. der volle Ladestrom wird geliefert. Erreicht die Batteriespannung die Spannung U₂, so ist die Batterie bereits fast vollständig geladen und es wird wiederum auf die Hilfsschaltung umgeschaltet, diese übernimmt die Versorgung für das Balancing bei Lithium-Ionen-Batterien bzw. für die Erhaltungsladung bei Bleibatterien.

Alternativ oder zusätzlich zu der vorstehend beschriebenen Hilfsschaltung kann auch die Gleichrichterschaltung 14 mit ihrer PFC-Schaltung so eingestellt werden, dass die Ausgangsspannung konstant gehalten wird. Wird die Gleichrichterschaltung über einen Mikrocontroller gesteuert, so besteht die Möglichkeit, die am Gleichspannungswandler anliegende Eingangsspannung auf einfache Weise zu variieren. Im Falle der Tiefentladung, wenn also die Batteriespannung zwischen Uₘᵢₙ und U₁ liegt, kann über die Gleichrichterschaltung 14 eine minimale Zwischenkreisspannung U_{ZK,min} eingestellt werden. Die minimale Zwischenkreisspannung U_{ZK,min} ergibt sich aus den Werten der gleichgerichteten Netzspannung (√2 • 230V≈325V) und der Berücksichtigung eines Puffers zum Ausgleich von Toleranzen, so dass als minimale Zwischenkreisspannung im Praxisfall beispielsweise 340V gewählt werden kann. Im Fall, dass die Batteriespannung zwischen U₂ und Uₘₐₓ liegt, also eine Balancing, bzw. eine Erhaltungsladung erfolgt, wird die Gleichrichterschaltung so angesteuert, dass die Zwischenkreisspannung maximal ist. Der maximale Wert der Zwischenkreisspannung wird durch die Spannungsfestigkeit der Leistungshalbschalter bestimmt, die in der PFC-Schaltung eingesetzt werden und typischerweise 600V bis 650V beträgt. Aus Sicherheitsgründen ist ein Puffer von 30% bis 50% eingeplant, so dass sich ein maximaler Wert U_{ZK,max} von 400V bis 500V ergibt. In Kombination mit dem Regelbereich des Gleichspannungswandlers 18 DC/DC ergibt sich auf diese Weise ein Gesamtregelbereich, der es ermöglicht, ausgangsseitig den Spannungsbereich von Umin bis Uₘₐₓ abzudecken.

## Patentansprüche

1. Ladegerät mit mindestens einem GaN-Transistor, insbesondere ein Einbauladegerät für ein Flurförderzeug, dessen Leistungselektronik eine Gleichrichterschaltung mit einer Leistungsfaktorkorrektur und einen über einen Gleichspannungszwischenkreis angeschlossenen Gleichspannungswandler aufweist,
**dadurch gekennzeichnet, dass**
• ein Hauptladebereich mit mindestens einem Spannungsintervall für den Gleichspannungswandler und
• mindestens ein Hilfsladebereich mit mindestens einem Spannungsintervall außerhalb des Hauptladebereichs vorgesehen sind, wobei ein Hilfsladestrom in dem Hilfsladebereich kleiner als ein Ladestrom im Hauptladebereich ist.

2. Ladegerät nach Anspruch 1, **dadurch gekennzeichnet, dass** in dem Hauptladebereich über den Gleichspannungswandler und in dem mindestens einen Hilfsladebereich mit einer Hilfsschaltung geladen wird.

3. Ladegerät nach Anspruch 1 oder 2, **dadurch gekennzeichnet, dass** der Gleichspannungswandler als ein Resonanzwandler mit mindestens einem GaN-Transistor ausgestattet ist.

4. Ladegerät nach einem der Ansprüche 1 bis 3, **dadurch gekennzeichnet, dass** eine Steuerung vorgesehen ist, die zwischen dem Haupt- und dem mindestens einen Hilfsladebereich abhängig von einer Batteriespannung umschaltet.

5. Ladegerät nach einem der Ansprüche 1 bis 4, **dadurch gekennzeichnet, dass** ein erster Hilfsladebereich für tiefentladene Batterien vorgesehen ist, in dem der Ladevorgang mit einem ersten Hilfsladestrom erfolgt.

6. Ladegerät nach einem der Ansprüche 1 bis 5, **dadurch gekennzeichnet, dass** ein zweiter Hilfsladebereich für ein Balancing und / oder eine Erhaltungsladung der Batterie vorgesehen ist, in dem der Ladevorgang mit einem zweiten Hilfsladestrom erfolgt.

7. Ladegerät nach einem der Ansprüche 1 bis 6, **dadurch gekennzeichnet, dass** als Hilfsladeschaltung eine Schaltung mit einem Sperrwandler und einem Abwärtswandler vorgesehen ist.

8. Ladegerät nach einem der Ansprüche 1 bis 7, **dadurch gekennzeichnet, dass** die Gleichrichterschaltung dazu ausgebildet ist, über einen elektrischen Steckverbinder an eine Wechselspannungsquelle, insbesondere eine Wechselspannungs-Steckdose angeschlossen zu werden.

9. Ladegerät nach einem der Ansprüche 1 bis 8, **dadurch gekennzeichnet, dass** der Gleichspannungswandler zur Verbindung mit Lithium-Ionen Batterien oder Feststoffbatterien ausgebildet ist, wobei die Batterien mit einem C-Faktor als Ladekapazität von 0,5 C bis 1,5 C, bevorzugt mit 0,8 C bis 1,2 C geladen werden können, während Bleibatterien mit einem C-Faktor von weniger als 0,4 C, bevorzugt mit 0,1 C bis 0,3 C geladen werden.

10. Ladegerät nach Anspruch 9, **dadurch gekennzeichnet, dass** eine Ladekurve für eine Bleibatterie vorgesehen ist, die bei einer entsprechenden Parametrierung des Ladegerätes verwendet wird und abhängig von der Batteriespannung den Gleichspannungswandler oder die mindestens eine Hilfsschaltung ansteuert.

11. Ladegerät nach einem der Ansprüche 1 bis 10, **dadurch gekennzeichnet, dass** über die Gleichrichterschaltung der Wert der Spannung im Gleichspannungszwischenkreis eingestellt wird.

12. Ladegerät nach Anspruch 11, **dadurch gekennzeichnet, dass** der Wert der Spannung in dem Gleichspannungszwischenkreis abhängig von der Batteriespannung eingestellt wird.
